# DEMANDE DE BREVET EUROPEEN

(11) **EP 4 496 269 A1**
(43) Date de publication de la demande: **22.01.2025**
(21) Numéro de dépôt: 24189657.0
(22) Date de dépôt: 19.07.2024
(51) Int. Cl.: H04L 9/40, H04L 9/00, H04L 9/32, H04W 4/48, H04L 67/12

(54) **STOCKAGE ROBUSTE**

(30) Priorité: 21.07.2023 FR 2307836
(71) Demandeur: STMicroelectronics International N.V., 1228 Plan-les-Ouates, Geneva (CH)
(72) Inventeur: TABARIES, Laurent, 13400 AUBAGNE (FR)
(74) Mandataire: Cabinet Beaumont

(57) **Abrégé**

La présente description concerne un procédé comprenant :
- la transmission, par au moins un circuit périphérique d'un système de stockage pour un véhicule automobile, d'une ou plusieurs données à stocker, vers au moins deux circuits du véhicule ;
- la recherche d'une preuve de travail ;
- lorsqu'un premier des au moins deux circuits a trouvé une potentielle preuve de travail, la transmission de la potentielle preuve de travail à chacun des autres circuits ;
- la vérification de la potentielle preuve de travail ; et
- si la vérification confirme que la potentielle preuve de travail correspond à la preuve de travail recherchée, le stockage, dans chacun des circuits, d'une ou plusieurs données dans un bloc courant d'une chaîne de blocs, la ou les données étant stockées en association avec une valeur d'identification du bloc précédent, la preuve de travail et une valeur d'identification du bloc courant.

## Description

### Domaine technique

La présente description concerne de façon générale le stockage de paramètres décrivant des événements et/ou des états d'un véhicule automobile.

### Technique antérieure

Lors du fonctionnement d'un véhicule automobile, des données décrivant des états, tels que, par exemple, la vitesse, le régime moteur, la pression des pneus, des temps de freinage etc., sont enregistrés et stockés de manière périodique dans une mémoire non volatile du véhicule.

Le stockage de ces données permet de retracer l'historique du véhicule, par exemple suite à un accident.

Cependant, dans le cas où la mémoire non volatile dans laquelle sont stockées ces données est endommagée, par exemple lors d'un choc, les données peuvent être perdues.

Il existe un besoin d'améliorer la façon dont sont stockées ces données afin de réduire le risque, en cas d'accident endommageant le véhicule, de perdre l'accès à ces données. De plus, il est souhaitable que les données accessibles soient intègres.

### Résumé de l'invention

Un mode de réalisation prévoit un procédé comprenant :
- la transmission, par au moins un circuit périphérique d'un système de stockage de données pour un véhicule automobile, d'une ou plusieurs données à stocker, vers au moins deux circuits du véhicule automobile ;
- la recherche, par chacun des au moins deux circuits, d'une preuve de travail ;
- lorsqu'un premier des au moins deux circuits a trouvé une potentielle preuve de travail, la transmission, par ledit premier circuit, de la potentielle preuve de travail trouvée à chacun des autres circuits parmi les au moins deux circuits ;

- la vérification, par chacun des autres circuits, de la potentielle preuve de travail ; et
- si la vérification confirme que la potentielle preuve de travail correspond bien à la preuve de travail recherchée, le stockage, dans chacun des circuits, de l'une ou plusieurs données dans un bloc courant d'une chaîne de blocs, la ou les données étant stockées en association avec une valeur d'identification du bloc directement précédent dans la chaîne de blocs, la preuve de travail et une valeur d'identification du bloc courant, la valeur d'identification du bloc courant étant calculée sur la base de la valeur d'identification du bloc directement précédent, de l'une ou plusieurs données et de la preuve de travail.

Selon un mode de réalisation, le procédé ci-dessus comprend en outre, avant le stockage dans chacun des au moins deux circuits, le calcul d'une valeur de signature sur la base de la ou des données, la valeur d'identification du bloc courant étant en outre calculée sur la base de la valeur de signature.

Selon un mode de réalisation, la valeur d'identification du bloc courant est une valeur de hachage.

Selon un mode de réalisation, la recherche de la preuve de travail, par chacun des au moins deux circuits, comprend :
a) la génération, par un générateur de nombres dudit circuit, d'une valeur candidate ;
b) la fourniture de la valeur candidate à un processeur dudit circuit ;
c) la vérification de si la valeur candidate correspond à une valeur de défi cible pour une valeur de réponse donnée ; et
d) si la valeur candidate ne correspond pas, la répétition de a), b) et c) une ou plusieurs fois.

Selon un mode de réalisation, la valeur candidate correspondant à la valeur de défi cible est la preuve de travail.

Selon un mode de réalisation, la ou les données correspondent à des enregistrements de paramètres du véhicule automobile lorsque son moteur est en fonctionnement.

Selon un mode de réalisation, le procédé ci-dessus comprend en outre en outre d'autres transmissions, par l'au moins un circuit périphérique, d'une ou plusieurs autres données à stocker, vers les au moins deux circuits, les autres transmissions s'effectuant à intervalles de temps régulier.

Un mode de réalisation prévoit un système de stockage de données pour un véhicule automobile, le système comprenant :
- au moins un circuit périphérique configuré pour transmettre une ou plusieurs données à stocker vers au moins deux circuits ;
- les au moins deux circuits configurés pour :
   rechercher une preuve de travail ;
   dès que une potentielle preuve de travail a été trouvée par au moins un premier des deux circuits, ledit premier circuit est en outre configuré pour :
      transmettre la potentielle preuve de travail trouvée à chacun des autres circuits parmi les au moins deux circuits, lesdits autres circuits étant en outre configurés pour vérifier la potentielle preuve de travail ; et
      si la potentielle preuve de travail correspond bien à la preuve de travail recherchée, les au moins deux circuits sont en outre configurés pour :
         stocker l'une ou plusieurs données dans un bloc d'une chaîne de blocs, la ou les données étant stockées en association avec une valeur d'identification du bloc directement précédent dans la chaîne de blocs, la preuve de travail et
         une valeur d'identification du bloc courant, la valeur d'identification du bloc courant étant calculée sur la base de la valeur d'identification du bloc directement précédent, de l'une ou plusieurs données et de la preuve de travail.

Un mode de réalisation prévoit un véhicule automobile comprenant le système ci-dessus, dans lequel les au moins deux circuits sont distribués en réseau dans le véhicule automobile, chaque circuit étant relié à chacun des autres circuits par une liaison de communication.

Selon un mode de réalisation, la liaison de communication entre les circuits utilise un protocole de communication filaire, par exemple de type Ethernet ou de type réseau de contrôle de région, CAN.

Selon un mode de réalisation, le réseau formé par les circuits utilise un protocole de communication non filaire.

Selon un mode de réalisation, au moins 5, et par exemple au moins 10, circuits forment le réseau.

Selon un mode de réalisation, l'au moins un circuit périphérique est configuré pour enregistrer un ou plusieurs paramètres du véhicule, l'un ou plusieurs paramètres correspondants aux données transmises.

Un mode de réalisation prévoit un circuit sécurisé comprenant :
- un générateur de nombres configuré pour générer des valeurs candidates ;
- un processeur configuré pour vérifier si chaque valeur candidate générée correspond à une valeur de défi cible ; et
- une mémoire non volatile comprenant une chaîne de blocs, le circuit étant en outre configuré pour, lorsque qu'une valeur candidate correspond à la valeur de défi cible, transmettre ladite valeur candidate comme étant une preuve de travail vers d'autres circuits, ou pour recevoir une preuve de travail, transmise par un autre circuit, le processeur étant alors en outre configuré pour vérifier si la preuve de travail correspond à la valeur de défi cible, la mémoire non volatile étant configurée pour stocker, dans un bloc courant de la chaîne de blocs, la ou les données en association avec une valeur d'identification du bloc directement précédent le bloc courant, une valeur d'identification du bloc courant et de la preuve de travail,
le processeur étant en outre configuré pour générer la valeur du bloc courant sur la base de la valeur d'identification du bloc directement précèdent, de la ou des données et de la preuve de travail.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma par bloc représentant un système de stockage de données, selon un mode de réalisation de la présente description ;
la figure 2 est un schéma par bloc représentant un réseau de circuits sécurisés ;
la figure 3 illustre une structure de stockage de données dans les circuits sécurisés, selon un mode de réalisation de la présente description ; et
la figure 4 est un organigramme illustrant des étapes dans un procédé de stockage de données, selon un mode de réalisation de la présente description.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les opérations de hachage et de calcul de signatures ne sont pas décrites en détail. De même, les protocoles de validation par preuve de travail ne sont pas décrits en détail et sont connus par la personne du métier.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

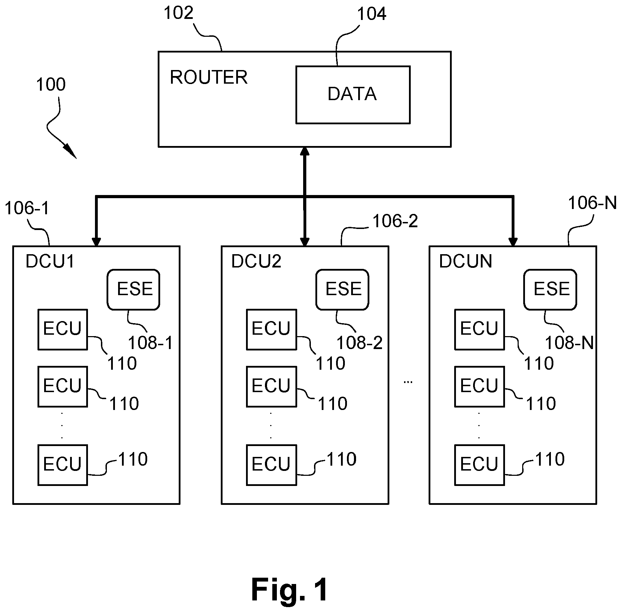

La figure 1 est un schéma par bloc représentant un système électronique 100, selon un mode de réalisation de la présente description. Selon un mode de réalisation, le système 100 est un système de stockage de données pour un véhicule automobile.

Le système 100 comprend, par exemple, un routeur 102 (ROUTER) adapté à recevoir et transmettre des données 104 (DATA) . Dans un exemple, le routeur 102 est un module de communication par internet, comme un module ayant accès au réseau de téléphonie mobile de cinquième génération (5G), ou un module ayant accès à internet grâce à un protocole de communication sans fil de type Wi-Fi. Le routeur 102 est donc adapté à recevoir et à transmettre des données au sein du système 100, mais aussi avec un ou plusieurs autres systèmes électroniques externes au système 100.

Le système 100 est par exemple adapté à mettre en oeuvre une multitude de fonctionnalités qui sont regroupées en plusieurs domaines de fonctionnement. Le système 100 comprend, par exemple, N domaines de fonctionnement 106-1 (DCU1), 106-2 (DCU2), ... et 106-N (DCUN), N étant un entier supérieur ou égal à deux. Chaque domaine fonctionnement 106-i, i étant un entier variant de 1 à N, comprend au moins un circuit 108-i et un ou plusieurs, généralement entre 2 et 20, dispositifs électroniques 110 (ECU) chacun adapté à mettre en oeuvre une ou plusieurs fonctionnalités. Dans certains modes de réalisation, les circuits 108-i sont des circuits sécurisés ou des éléments sécurisés, comprenant des moyens de stockage sécurisés. En particulier, un circuit sécurisé est un circuit comportant des mécanismes protégeant les éléments de traitement et de stockage des données sensibles, rendant difficile l'extraction de ces données sensibles par des personnes non autorisées.

Un premier domaine de fonctionnement peut concerner le domaine du moteur, et comprendre les dispositifs électroniques gérant, par exemple, l'injection, les modes de fonctionnement du moteur, les capteurs permettant de surveiller le bon fonctionnement et/ou l'usure du moteur, etc. Un deuxième domaine de fonctionnement peut concerner la sécurité au sein du véhicule, et comprendre les dispositifs électroniques gérant, par exemple, la pression des pneus, les freins, les appels d'urgence, etc. Un troisième domaine de fonctionnement peut concerner l'habitacle du véhicule, et comprendre les dispositifs électroniques gérant, par exemple, l'air conditionné, le chauffage, l'éclairage, etc. Un quatrième domaine de fonctionnement peut concerner le contenu multimédia du véhicule, et comprendre les dispositifs électroniques gérant, par exemple, une radio ou un autoradio, un système de sonorisation, un ou plusieurs écrans, etc.

Dans un exemple, un ou plusieurs des domaines de fonctionnement sont configurés pour enregistrer des données d'historique, telles que, par exemple, la vitesse du véhicule, la durée durant laquelle le moteur est en fonctionnement, l'usure des freins, la pression des pneus, la localisation GPS (de l'anglais « Global Positioning System ») du véhicule, la température moteur, le régime moteur, et bien d'autres exemples. Ces données d'historique sont par exemples fournies au routeur 102. Selon un mode de réalisation, le routeur 102 est configuré pour commander le stockage des données d'historique dans chacun des circuits sécurisés. A titre d'exemple, le routeur 102 est configuré pour commander le stockage de données d'historiques acquises, par exemple, par les domaines de fonctionnement et/ou d'autres circuits périphériques du véhicule automobile, à intervalle de temps réguliers, par exemple toutes les secondes, toutes les minutes ou toutes les heures. Le routeur 102 est, par exemple, en outre configuré pour commander le stockage des données d'historiques acquises à chaque extinction du moteur du véhicule. Dans ce cas, le système 100 reste par exemple alimenté pendant un certain laps de temps, par exemple une dizaine de secondes, suite à l'extinction du moteur, afin de pouvoir procéder au stockage des données d'historique dans les circuits sécurisés 108-i.

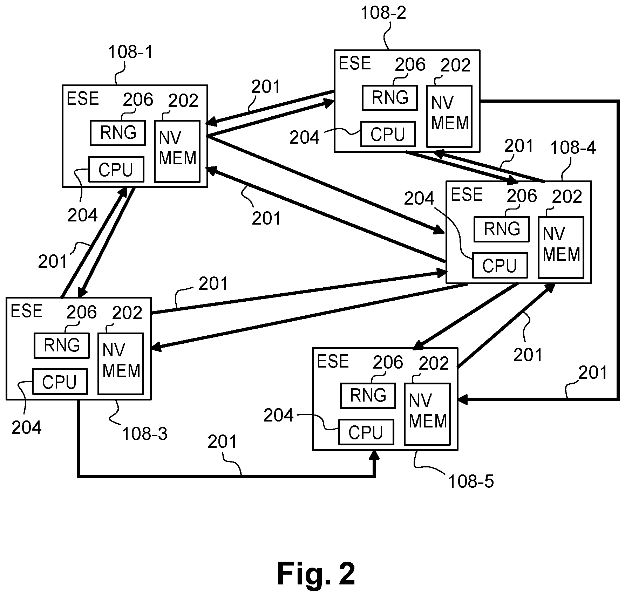

La figure 2 est un schéma par bloc des circuits sécurisés 108-i (ESE) distribués en un réseau 200 dans un système de stockage de données, par exemple au sein du véhicule automobile. Bien que le réseau 200 illustré en figure 2 comprenne les circuits sécurisés 108-1 à 108-5, il est tout à fait possible que le réseau 200 soit constitué d'un plus grand, ou d'un plus petit, nombre de circuits sécurisés. A titre d'exemple, le réseau 200 comprend une dizaine de circuits sécurisés. A titre d'exemple, chaque circuit sécurisé 108-i appartient à un domaine de fonctionnement différent du véhicule. Dans un autre exemple, deux circuits sécurisés parmi les circuits sécurisés du réseau 200 sont compris dans un même domaine de fonctionnement du véhicule.

A titre d'exemple, chaque circuit sécurisé 108-i est relié à chacun des autres circuits sécurisés 108-i par l'intermédiaire d'une liaison 201. Pour des raisons de clarté, la figure 2 illustre uniquement certaines liaisons 201 entre les circuits sécurisés 108-i. A titre d'exemple, les liaisons 201 sont, par exemple, effectuées de manière filaire et mettent, par exemple, en oeuvre un protocole de communication filaire, tel qu'un protocole Ethernet. Dans un autre exemple, les liaisons 201 sont des liaisons non filaires, mettant en oeuvre un protocole de communication de type WiFi ou 5G.

Chaque circuit sécurisé 108-i comprend un ou plusieurs moyens de stockage, comme un registre ou une mémoire non volatile 202, permettant de conserver des données de manière sécurisée. En particulier, chaque circuit sécurisé 108-i est résistant face à une attaque par canaux cachés (en anglais « side channels attack »). Des mécanismes de protection contre de telles attaques sont bien connus par des personnes du métier, et ne seront pas détaillés. Selon un mode de réalisation, chaque mémoire non volatile 202 est configurée pour stocker une suite de données d'historique dans une structure de données formant une chaîne de blocs (en anglais « blockchain »).

Chaque circuit sécurisé 108-i comprend, par exemple, en outre un processeur 204 (CPU) et un générateur de nombres 206 (RNG). Lorsque que le routeur 102 commande le stockage des données d'historique 104, chaque générateur de nombres 206 est par exemple configuré pour générer une valeur et pour la transmettre au processeur 204 du circuit sécurisé. Le processeur 204 est alors configuré pour vérifier si la valeur générée solutionne un problème mathématique prédéfini en amont.

A titre d'exemple, le problème mathématique à résoudre consiste à retrouver une valeur de défi pour une valeur de réponse donnée. Par exemple, un processeur principal, qui peut être un autre processeur du système 100 (non illustré) relié au réseau 200, ou l'un des processeurs 204 des circuits sécurisés 108-i génère une valeur de hachage cible, par exemple de manière aléatoire, et la transmet à chacun des circuits sécurisés 118-i. Chaque générateur de nombres 206 génère alors une valeur candidate qu'il transmet au processeur 204 correspondant. Chaque processeur 204 est alors configuré pour appliquer à la valeur candidate une fonction de hachage, par exemple le SHA-256, le SHA-512, etc. et pour vérifier si la valeur obtenue suite au hachage de la valeur candidate correspond à la valeur de hachage cible transmise par le processeur principal. Dès qu'un circuit sécurisé 108-i détecte qu'une valeur candidate générée correspond à une valeur qui, suite à l'opération de hachage, résulte en la valeur de hachage cible, la valeur candidate générée devient une preuve de travail potentielle, et cette valeur est transmise, par le circuit sécurisé en question, vers chacun des autres circuits sécurisé 108-i. Chacun des autres circuits sécurisés 108-i est alors configuré pour vérifier que la valeur de travail potentielle, transmise par le circuit sécurisé en question, résulte bien, suite à l'application de la fonction de hachage, en la valeur de hachage cible. La valeur générée constitue alors une preuve de travail.

De manière générale, comme alternative à une fonction de hachage, d'autres problèmes mathématiques peuvent être fournis aux circuits sécurisés 108-i. Le principe étant que, chaque circuit sécurisé 108-i teste une à une des valeurs générées par son générateur de nombres 206 afin de vérifier si celles-ci correspondent à une valeur de défi pour une valeur de réponse donnée, par exemple fournie par le processeur principal, et pour un problème mathématique de type « défi-réponse » défini en amont. Le problème mathématique est tel que la valeur de défi est difficilement trouvable, mais facilement vérifiable. Ainsi, la relation entre la valeur de défi et la valeur de réponse peut être une fonction de hachage, ou une autre opération cryptographique. L'opération reliant la valeur de défi à la valeur de réponse est une opération bijective, chaque valeur de réponse est par exemple associée à une unique valeur de défi.

Selon un mode de réalisation, le stockage des données d'historique dans chacun des circuits sécurisés 108-i est conditionné par la recherche de la preuve de travail.

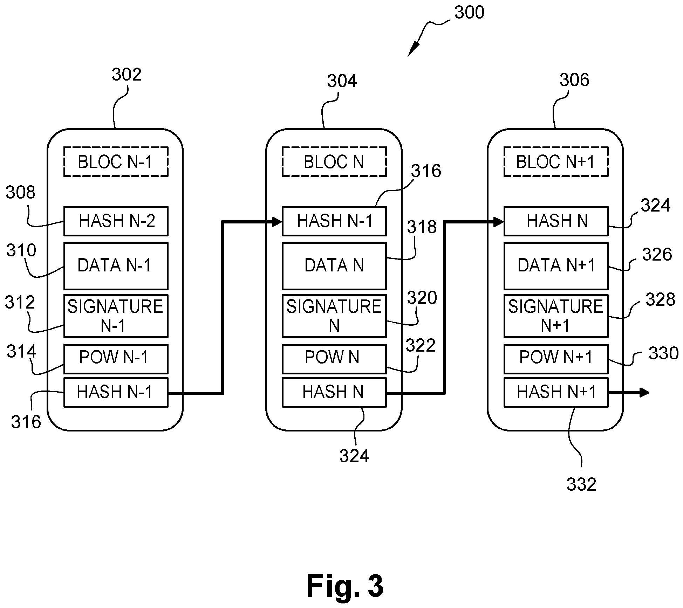

La figure 3 illustre un exemple d'une structure de stockage 300 de données dans les circuits sécurisés 108-i des figure 1 et 2, selon un mode de réalisation de la présente description.

Selon un mode de réalisation, chaque circuit sécurisé 108-i comprend la structure de stockage 300. Dans certains modes de réalisation, la structure 300 et les données comprises dedans sont exactement identiques d'un circuit sécurisé 108-i à l'autre.

Selon un mode de réalisation, la structure 300 prend la forme d'une chaîne de blocs. Chaque fois que le routeur 102 commande le stockage de données d'historique, un nouveau bloc est ajouté à la suite des blocs existants. La chaîne de blocs comprend donc un historique de paramètres et/ou d'états décrivant le fonctionnement du véhicule automobile depuis, par exemple, sa mise en circulation.

La figure 3 illustre en particulier trois blocs successifs 302 (BLOC N-1), 304 (BLOC N) et 306 (BLOC N+1) de la chaîne de bloc 300.

Le bloc 302 comprend par exemple une valeur d'identification 308 (HASH N-2) du bloc directement précèdent dans la chaîne de blocs 300. A titre d'exemple, la valeur d'identification 308 est une valeur obtenue suite à l'application d'une application de hachage sur le contenu du bloc directement précédent.

Le bloc 302 comprend en outre des données d'historique 310 (DATA N-1) associées à la N-1ème commande de stockage, N étant un entier supérieur ou égale à 1. Le bloc 302 comprend en outre une valeur de signature 312 (SIGNATURE N-1). A titre d'exemple, la valeur de signature 312 est une signature obtenue à partir des données 310.

Selon un mode de réalisation, le bloc 302 comprend en outre la valeur d'une preuve de travail 314 (POW N-1). La preuve de travail 314 est par exemple une valeur générée par l'un des circuits sécurisés 108-i et solutionnant un problème mathématique. Cette valeur est vérifiée par les autres circuits sécurisés 108-i et si la vérification est réussie, la valeur est stockée comme preuve de travail dans le bloc 302. La recherche de la preuve de travail 314 est effectuée suite à la commande de stockage des données 310. La construction du bloc 302 est réalisée une fois la preuve de travail 314 trouvée et vérifiée par l'ensemble des circuits sécurisés 108-i.

Le bloc 302 comprend en outre une valeur d'identification 316 (HASH N-1) du bloc 302. La valeur d'identification 316 est par exemple calculée, par chaque processeur 204, en appliquant une opération de hachage sur la valeur d'identification 308, les données 310, la signature 312 et la preuve de travail 314. A titre d'exemple, l'opération de hachage est appliquée sur une concaténation des valeurs et données 308, 310, 312 et 314.

Le bloc 304 est ensuite ajouté à la chaîne de blocs 300, directement à la suite du bloc 302. A titre d'exemple, le bloc 304 est ajouté suite à la commande de stockage de nouvelles données d'historique 318 (DATA N) acquises, par exemple, directement suite aux données d'historique 310.

La valeur d'identification 316 du bloc 302 est stockée dans le bloc 304. Le stockage de la valeur d'identification 316 dans le bloc 304 permet de relier les blocs 302 et 304 entre eux. Il est alors impossible pour une tierce personne d'ajouter un autre bloc entre les blocs 302 et 304.

Le bloc 304 comprend en outre les données d'historique 318 et une valeur de signature 320 (SIGNATURE N). La valeur de signature 320 est par exemple une signature des données d'historique 318. Tout comme le bloc 302, le bloc 304 comprend une preuve de travail 322 (POW 322).

La preuve de travail 322 est recherchée suite à la commande de stockage des données 318. En particulier la valeur de la preuve de travail 322 diffère de la valeur de la preuve de travail 314 car elle solutionne un problème mathématique différent que celui utilisé pour la recherche de la preuve de travail 314. A titre d'exemple, le processeur principal génère une nouvelle valeur de hachage à chaque commande de stockage de données d'historique et la fournit comme valeur de réponse à chacun des circuits sécurisés 108-i. La preuve de travail pour chaque bloc de la chaîne de blocs 300 correspond alors à la valeur de défi résultante en la valeur de réponse fournie.

Le bloc 304 comprend en outre une valeur d'identification 324 (HASH N). A titre d'exemple, la valeur d'identification 324 est obtenue suite à l'application d'une opération de hachage sur les valeurs et données 316, 318, 320 et 322.

La valeur d'identification 324 sera alors stockée dans le bloc 306, directement suivant le bloc 304 afin de directement lier les deux blocs. La structure du bloc 306 est identique à celle des blocs 302 et 304. Autrement dit, le bloc 306 comprend, en plus de la valeur d'identification 324, des données d'historique 326 (DATA N+1) acquises suite aux données 318, une signature 328 (SIGNATURE N+1) et une preuve de travail 328 (POW N+1). La preuve de travail 330 est recherchée sur la base d'une valeur de réponse différente de celles utilisées pour les blocs 302 et 304. Le bloc 306 comprendra en outre une valeur d'identification 332 (HASH N+1) calculée sur la base des valeurs et données 324, 326, 328 et 330. La valeur d'identification 332 sera alors aussi stockée dans le bloc directement suivant le bloc 306 afin de les lier directement.

A titre d'exemple, pour chacun des blocs de la chaîne de blocs 300, et en particulier pour les blocs 302, 304 et 306, les valeurs d'identification 308, 316 et 324 du bloc directement précédent sont stockées en début de bloc, suivies respectivement et dans l'ordre, par les données d'historique 310, 318 et 326, la signature 312, 320 ou 328, la preuve de travail 314, 322 ou 330 puis la valeur d'identification 316, 324 ou 332. A titre d'exemple, chaque bloc de la chaîne de blocs 300 commence par la valeur d'identification du bloc directement précédent et se termine par sa valeur d'identification.

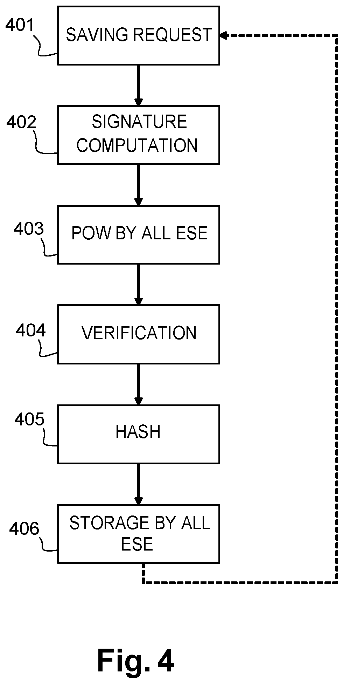

La figure 4 est un organigramme illustrant des étapes d'un procédé de stockage de données, selon un mode de réalisation de la présente description.

Dans une étape 401 (SAVING REQUEST), une requête de stockage de données d'historique est commandée. A titre d'exemple, la requête est effectuée par le routeur 102 ou par le processeur principal, et est transmise vers les circuits sécurisés 108-i.

A titre d'exemple, le procédé continue dans une étape 402 (SIGNATURE COMPUTATION) dans laquelle une signature des données d'historique est calculée. A titre d'exemple, la signature est calculée par chaque processeur 204 des circuits sécurisés 108-i.

Dans une étape 403 (POW BY ALL ESE), le processeur principal fournit par exemple un même problème mathématique à chacun des circuits sécurisés 108-i. A titre d'exemple, le processeur principal fournit une valeur, par exemple générée aléatoirement, aux circuits sécurisés 108-i. A titre d'exemple, la valeur correspond à une valeur de hachage, ou plus généralement à un résultat d'une opération cryptographique bijective sur une valeur de défi. La résolution du problème mathématique correspond à la recherche, par chacun des circuits sécurisés 108-i et indépendamment les uns des autres, de la valeur de défi, qui lorsqu'on lui applique l'opération de hachage, ou plus généralement l'opération cryptographique bijective, résulte en la valeur générée par le processeur principal. A titre d'exemple, la résolution du problème est effectuée, dans chacun des circuits sécurisés 108-i, par un premier processeur cryptographique (non illustré en Figure 2). A titre d'exemple, les paramètres cryptographiques, tels que des clefs de chiffrements et/ou déchiffrement, sont identiques d'un processeur cryptographique d'un circuit sécurisé 108-i à l'autre.

La recherche de la valeur de défi comprend la génération, par chacun des générateurs de nombres 206 de chacun des circuits sécurisés 108-i, d'une valeur candidate et la vérification, par exemple par les processeurs 206, ou par les circuits cryptographiques, de si la valeur candidate générée correspond à la valeur de défi pour la valeur de réponse fournie par le processeur principal. Les circuits sécurisés 108-i recherchent donc, en parallèle et indépendamment les uns des autres, la valeur correspondant au défi pour la valeur de réponse fournie.

Durant la réalisation de l'étape 403, les circuits sécurisés 108-i sont en compétition. Tant que la valeur n'est pas trouvée, les circuits sécurisés sont configurés pour régénérer de nouvelles valeurs et les tester, chacun de leur côté.

Lorsqu'un des circuits sécurisés 108-i trouve la bonne valeur de défi, la valeur est transmise, dans une étape 404 (VERIFICATION) vers les autres circuits sécurisés 108-i. Les autres circuits 108-i sont alors configurés pour vérifier, par exemple par l'intermédiaire des processeurs 204, si la valeur est bien la bonne valeur de défi. Si la valeur de défi fournie n'est finalement pas la bonne, les circuits sécurisés 108-i sont tous configurés pour reprendre la recherche.

Si suite à la vérification effectuée par chacun des circuits sécurisés 108-i, il est déterminé que la valeur fournie est bien la valeur de défi correspondant à la valeur de réponse fournie par le processeur principal, la recherche se termine. La valeur de défi vérifiée est alors gardée en mémoire dans chacun des circuits sécurisés 108-i et constitue une preuve de travail.

Dans une étape 405 (HASH), une opération de hachage est par exemple appliquée, par chacun des processeurs 206, à la valeur d'identification du dernier bloc de la chaîne de bloc 300 stockée, par exemple, dans chacune des mémoires volatiles 204. L'opération de hachage est en outre appliquée sur les données d'historiques, par exemple fournies par le routeur 102, à la valeur de signature calculée lors de la réalisation de l'étape 402 et sur la preuve de travail, vérifiée lors de la réalisation de l'étape 404. Le résultat l'opération de hachage constitue alors un identifiant du bloc de la chaîne de blocs dans lequel les données d'historique seront stockées. A titre d'exemple, chaque circuit sécurisé 108-i comprend un deuxième circuit cryptographique configuré pour effectuer l'opération de hachage. A titre d'exemple, les paramètres des deuxièmes circuits cryptographiques sont différents d'un circuit sécurisé 108-i à l'autre. Ainsi, dans le cas où un attaquant réussirait à obtenir les paramètres cryptographiques d'un des deuxièmes circuits cryptographiques, cela ne lui permettrait pas de modifier les chaînes de blocs stockées dans les autres circuits sécurisés 108-i.

Suite au calcul de la valeur d'identification, un nouveau bloc est ajouté, par exemple par chaque processeur 204, à la chaîne de blocs stockée, par exemple, dans la mémoire non volatile 202. Chaque processeur 204 est en outre configuré pour stocker, dans ce nouveau bloc et dans une étape 406 (STORAGE BY ALL ESE), la valeur d'identification du bloc directement précédent, les données d'historique, la valeur de signature, la preuve de travail et la valeur d'identification calculée dans l'étape 405. Un exemple de la structure de la chaîne de blocs stockée dans la mémoire 202 et de la structure de chaque bloc est décrite en relation avec la figure 3.

Suite à la réalisation de l'étape 406, chaque circuit sécurisé 108-i comprend une chaîne de blocs, stockée dans sa mémoire non volatile 202. Pour chaque circuit sécurisé 108-i, la chaîne de blocs est identique aux autres chaines de blocs stockées dans les autres circuits sécurisés 108-i. Ainsi, chaque circuit sécurisé 108-i comprend une suite de données d'historique, chaque élément de la suite étant stockée, dans un bloc de la chaine, en association avec d'autres valeurs, telles que les valeurs d'identification, la valeur de signature et la preuve de travail. A titre d'exemple, la suite de données d'historique et/ou la chaîne de blocs entière est stockée dans chaque circuit sécurisé 108-i de manière chiffrée. A titre d'exemple, chaque deuxième circuit cryptographique est configuré pour chiffrer la suite de données d'historique.

Suite à l'étape 405, le procédé reprend dans une nouvelle réalisation de l'étape 401, lorsque d'autres données d'historiques seront à stocker. A titre d'exemple, lors que le véhicule automobile est en fonctionnement, le procédé se répète à un intervalle de temps réguliers. A titre d'exemple, l'extinction du moteur provoque aussi la réalisation de l'étape 401. Dans chaque réalisation de la suite d'étapes 401 à 406, la valeur de réponse fournie par le processeur principal pour la résolution du problème mathématique diffère. De plus, suite à chaque réalisation de la suite d'étapes 401 à 406, un nouveau bloc est ajouté à la suite des blocs déjà existants dans chaque chaîne de blocs.

Un avantage des modes de réalisations décrits est qu'un historique du fonctionnement du véhicule automobile est stocké simultanément dans plusieurs circuits sécurisés distribués dans le véhicule. Ainsi, si un circuit est endommagé, par exemple suite à un choc, l'historique peut quand même être récupéré dans les autres circuits sécurisés.

Un autre avantage des modes de réalisations décrits, et plus particulièrement un avantage découlant de la structure de stockage des données d'historique, est que la chaîne de blocs n'est pas modifiable, et en particulier n'est pas modifiable par une tierce personne. En effet, de par l'utilisation des valeurs d'identification, il n'est pas possible d'insérer un bloc entre deux blocs déjà existants. De même, il n'est pas possible d'ajouter un bloc sans connaître la valeur de vérification du bloc directement précédent. Il n'est pas non plus possible de modifier le contenu d'un bloc. En effet, la valeur d'identification d'un bloc est calculée à partir des données d'historique fournies par le routeur 102. Ainsi, modifier les données ferait perdre toute cohérence dans la structure des blocs et de la chaîne de blocs.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, pour ce qui est de la recherche de la preuve de travail, d'autres problèmes mathématiques que ceux décrits peuvent bien sûr être utilisés. Le principe de preuve du travail étant connu par la personne du métier, celle-ci saura adapter et choisir un type de problème mathématique qui convient.

## Revendications

1. Procédé comprenant :
- la transmission, par au moins un circuit périphérique d'un système (100) de stockage de données pour un véhicule automobile, d'une ou plusieurs données à stocker, vers au moins deux circuits sécurisés (108-1, 108-2, 108-3, 108-5, 108-N) du véhicule automobile ;
- la recherche, par chacun des au moins deux circuits sécurisés, d'une preuve de travail (322) ;
- lorsqu'un premier des au moins deux circuits sécurisé a trouvé une potentielle preuve de travail, la transmission, par ledit premier circuit sécurisé, de la potentielle preuve de travail trouvée à chacun des autres circuits sécurisés parmi les au moins deux circuits ;
- la vérification, par chacun des autres circuits sécurisés, de la potentielle preuve de travail ; et
- si la vérification confirme que la potentielle preuve de travail correspond bien à la preuve de travail recherchée, le stockage, dans chacun des circuits sécurisés, de l'une ou plusieurs données dans un bloc courant (304) d'une chaîne de blocs (300), la ou les données étant stockées en association avec une valeur d'identification (316) du bloc directement précédent dans la chaîne de blocs, la preuve de travail (322) et une valeur d'identification du bloc courant (324), la valeur d'identification du bloc courant étant calculée sur la base de la valeur d'identification du bloc directement précédent, de l'une ou plusieurs données et de la preuve de travail.

2. Procédé selon la revendication 1, comprenant en outre, avant le stockage dans chacun des au moins deux circuits sécurisés (108-1, 108-2, 108-3, 108-5, 108-N), le calcul d'une valeur de signature (320) sur la base de la ou des données, la valeur d'identification (324) du bloc courant (304) étant en outre calculée sur la base de la valeur de signature.

3. Procédé selon la revendication 1 ou 2, dans lequel la valeur d'identification (324) du bloc courant (304) est une valeur de hachage.

4. Procédé selon l'une quelconque des revendications 1 à 3, dans lequel la recherche de la preuve de travail (322), par chacun des au moins deux circuits sécurisés (108-1, 108-2, 108-3, 108-5, 108-N), comprend :
a) la génération, par un générateur de nombres (206) dudit circuit, d'une valeur candidate ;
b) la fourniture de la valeur candidate à un processeur (204) dudit circuit ;
c) la vérification de si la valeur candidate correspond à une valeur de défi cible pour une valeur de réponse donnée ; et
d) si la valeur candidate ne correspond pas, la répétition de a), b) et c) une ou plusieurs fois.

5. Procédé selon la revendication 4, dans lequel la valeur candidate correspondant à la valeur de défi cible est la preuve de travail (322).

6. Procédé selon l'une quelconque des revendications 1 à 5, dans lequel la ou les données correspondent à des enregistrements de paramètres du véhicule automobile lorsque son moteur est en fonctionnement.

7. Procédé selon l'une quelconque des revendications 1 à 6, comprenant en outre d'autres transmissions, par l'au moins un circuit périphérique, d'une ou plusieurs autres données à stocker, vers les au moins deux circuits sécurisés (108-1, 108-2, 108-3, 108-5, 108-N), les autres transmissions s'effectuant à intervalles de temps réguliers.

8. Système de stockage (100) de données pour un véhicule automobile, le système comprenant :
- au moins un circuit périphérique configuré pour transmettre une ou plusieurs données à stocker vers au moins deux circuits sécurisés (108-1, 108-2, 108-3, 108-5, 108-N) ;
- les au moins deux circuits sécurisés configurés pour :
rechercher une preuve de travail (314, 322, 330) ;
dès que une potentielle preuve de travail a été trouvée par au moins un premier des deux circuits sécurisés, ledit premier circuit sécurisé est en outre configuré pour :
transmettre la potentielle preuve de travail trouvée à chacun des autres circuits sécurisés parmi les au moins deux circuits sécurisés, lesdits autres circuits sécurisés étant en outre configurés pour vérifier la potentielle preuve de travail ; et
si la potentielle preuve de travail correspond bien à la preuve de travail recherchée, les au moins deux circuits sécurisés sont en outre configurés pour :
stocker l'une ou plusieurs données dans un bloc (302, 304, 306) d'une chaîne de blocs (300), la ou les données étant stockées en association avec une valeur d'identification (308, 316, 324) du bloc directement précédent dans la chaîne de blocs, la preuve de travail et une valeur d'identification (316, 324, 332) du bloc courant, la valeur d'identification du bloc courant étant calculée sur la base de la valeur d'identification du bloc directement précédent, de l'une ou plusieurs données et de la preuve de travail.

9. Véhicule automobile comprenant le système (100) selon la revendication 8, dans lequel les au moins deux circuits sécurisés (108-1, 108-2, 108-3, 108-5, 108-N) sont distribués en réseau dans le véhicule automobile, chaque circuit étant relié à chacun des autres circuits par une liaison de communication.

10. Véhicule automobile selon la revendication 9, dans lequel la liaison de communication entre les circuits sécurisés (108-1, 108-2, 108-3, 108-5, 108-N) utilise un protocole de communication filaire, par exemple de type Ethernet ou de type réseau de contrôle de région, CAN.

11. Véhicule automobile selon la revendication 9, dans lequel le réseau formé par les circuits sécurisés utilise un protocole de communication non filaire.

12. Véhicule automobile selon l'une quelconques des revendications 9 à 11, dans lequel entre 5 et 20 inclus, circuits sécurisés (108-1, 108-2, 108-3, 108-5, 108-N) forment le réseau.

13. Véhicule automobile selon l'une quelconques des revendications 8 à 12, dans lequel l'au moins un circuit périphérique est configuré pour enregistrer un ou plusieurs paramètres du véhicule, l'un ou plusieurs paramètres correspondants aux données transmises.

14. Circuit sécurisé (108-1, 108-2, 108-3, 108-5, 108-N) comprenant :
- un générateur de nombres (206) configuré pour générer des valeurs candidates ;
- un processeur (204) configuré pour vérifier si chaque valeur candidate générée correspond à une valeur de défi cible ; et
- une mémoire non volatile (202) comprenant une chaîne de blocs (300), le circuit sécurisé étant en outre configuré pour, lorsque qu'une valeur candidate correspond à la valeur de défi cible, transmettre ladite valeur candidate comme étant une preuve de travail (314, 322, 330) vers d'autres circuits sécurisés, ou pour recevoir une preuve de travail (322), transmise par un autre circuit sécurisé, le processeur étant alors en outre configuré pour vérifier si la preuve de travail correspond à la valeur de défi cible, la mémoire non volatile étant configurée pour stocker, dans un bloc courant (304) de la chaîne de blocs, la ou les données en association avec une valeur d'identification (316) du bloc directement précédent le bloc courant, une valeur d'identification (324) du bloc courant et de la preuve de travail,
le processeur étant en outre configuré pour générer la valeur du bloc courant sur la base de la valeur d'identification du bloc directement précèdent, de la ou des données et de la preuve de travail.
